# EUROPÄISCHE PATENTSCHRIFT

(11) **EP 3 234 393 B1**
(45) Veröffentlichungstag und Bekanntmachung des Hinweises auf die Patenterteilung: **09.01.2019**
(21) Anmeldenummer: 15807593.7
(22) Anmeldetag: 12.11.2015
(51) Int. Cl.: F16D 13/58

(54) **DECKELLOSE KUPPLUNG MIT HOHLBOLZEN UND ZENTRIERHILFEN**
COVERLESS CLUTCH HAVING HOLLOW PINS AND CENTERING AIDS
ACCOUPLEMENT SANS CAPOT POURVU DE BOULONS CREUX ET D'AUXILIAIRE DE CENTRAGE

(30) Priorität: 19.12.2014 DE 102014226563
(43) Veröffentlichungstag der Anmeldung: 25.10.2017
(73) Patentinhaber: Schaeffler Technologies AG & Co. KG, 91074 Herzogenaurach (DE)
(72) Erfinder: RABER, Christoph, 66564 Ottweiler-Steinbach (DE); FALK, Manuel, 77815 Bühl (DE)
(86) Internationale Anmeldenummer: PCT/DE2015/200498
(87) Internationale Veröffentlichungsnummer: WO 2016/095912

(56) Entgegenhaltungen:
- DE-A1- 3 417 224
- DE-A1- 19 638 918

## Beschreibung

Die Erfindung betrifft eine Kupplung gemäß dem Oberbegriff des Patentanspruchs 1. Insbesondere betrifft die Erfindung eine Kupplung (vorzugsweise eine Reib- / Reibungskupplung) für einen Antriebsstrang eines Kraftfahrzeuges, wie ein Pkw, Lkw, Bus oder landwirtschaftliches Nutzfahrzeug, mit einer zwischen einer eingekuppelten und einer ausgekuppelten Stellung verstellbar gelagerten (vorzugsweise axial verschiebbar gelagerten) Anpressplatte und einem Hebelelement, das an einer, durch mehrere Abstützbolzen ausgebildeten Schwenklagerung relativ zu der Anpressplatte schwenkbar abgestützt ist, wobei die Stellung der Anpressplatte von einer Verschwenkposition des Hebelelementes abhängig ist.

Die Kupplung ist hierbei vorzugsweise als eine deckellose Kupplung ausgeführt, d.h. es ist bei der Kupplungskonstruktion auf einen Kupplungsdeckel verzichtet.

Solche Kupplungen sind bereits aus dem Stand der Technik bekannt, wobei bspw. der Anmelderin die nicht vorveröffentlichte WO 2015188824 A1 bekannt ist. Hierin ist eine Kupplungsvorrichtung offenbart, die zumindest eine in axialer Richtung begrenzt verlagerbare Anpressplatte zur reibschlüssigen Klemmung einer Kupplungsscheibe zwischen der Anpressplatte und einer Gegendruckplatte aufweist. Auch weist diese Kupplungsvorrichtung zumindest ein Hebelelement auf, das mittels einer Schwenklagerung verkippbar in der Kupplungsvorrichtung gelagert ist. Das Hebelelement ist durch mehrere in Umfangsrichtung der Kupplungsvorrichtung verteilt angeordnete, mit der Gegendruckplatte verbundene, sich in axialer Richtung erstreckende Hohlbolzen zentrierbar.

Somit sind aus dem Stand der Technik auch bereits deckellose Kupplungen / Bolzenkupplungen bekannt, die auf einen herkömmlichen Kupplungsdeckel verzichten. Dadurch kann insbesondere Material eingespart werden und die Kupplung deutlich leichter gebaut werden. In diesem bezeichneten Stand der Technik hat es sich jedoch nachteilig herausgestellt, dass es hier bei der Montage der Kupplungsvorrichtung auf dem Schwungrad / auf der Gegendruckplatte zu Problemen kommen kann. Da die Abstützbolzen vor dem Verbinden / Befestigen an dem Schwungrad noch nicht in radialer Richtung ausgerichtet, d.h. zentriert sind, kann es in diesem Zusammenhang zu Problemen kommen. Denn dadurch kann die Montage nur sehr schwer in einem vorgegebenen Zeitfenster durchgeführt werden, da jeder Abstützbolzen beim Befestigen an der vorgesehenen Befestigungsstelle der Gegendruckplatte / des Schwungrades eingesetzt werden muss. Auch besteht die Gefahr, dass es zu einer fehlerhaften Montage, unter Einbringung zu hoher Eigenspannungen kommen kann.

Ferner ist aus der DE 196 38 918 A1 eine Kupplung bekannt, die auf den Oberbegriff des Patentanspruchs 1 lesbar ist.

Es ist Aufgabe der vorliegenden Erfindung, diese aus dem Stand der Technik bekannten Nachteile zu beheben und die Montage der Kupplung weiter zu vereinfachen.

Erfindungsgemäß wird dies durch eine Kupplung mit den Merkmalen des Patentanspruchs 1 gelöst. Bevorzugte Ausführungsbeispiele sind in den abhängigen Patentansprüchen dargelegt.

Jeder Abstützbolzen weist einen Zentrierabschnitt auf, welcher Zentrierabschnitt in einem Transportzustand der Kupplung an der Anpressplatte, den Abstützbolzen relativ zu der Anpressplatte zentrierend (d.h. relativ zu der Drehachse der Anpressplatte zumindest in radialer Richtung ausrichtend), anliegt.

Dadurch sind in dem Transportzustand der Kupplung die Bolzen / Abstützbolzen bereits vorzentriert. Wird der Zusammenbau aus Anpressplatte, Bolzen, Tellerfeder schließlich zum Inbetriebnehmen der Kupplung mit einer Gegendruckplatte / dem Schwungrad verbunden, fällt die aufwändige Zentrierung jedes einzelnen Abstützbolzens weg. Die Bolzen werden dann allesamt im gleichen Montageschritt gemeinsam in der bereits zentrierten Stellung in das Schwungrad eingesetzt und an diesem befestigt, da sie bereits relativ zueinander ausgerichtet sind und die korrekte, zentrierte Stellung aufweisen. Bei der Montage / beim Verbinden der Bolzen an dem Schwungrad wird dann die Anpressplattenzentrierung verlassen und gleichzeitig die Schwungradzentrierung gefangen. Somit ist stets für eine definierte Position der Hohlbolzen gesorgt.

Weitere vorteilhafte Ausführungsformen sind in den Unteransprüchen beansprucht und nachfolgend näher erläutert.

So ist es gemäß einer weiteren Ausführungsform von Vorteil, wenn der Zentrierabschnitt derart geometrisch ausgestaltet sowie auf die Anpressplatte abgestimmt ist, dass der jeweilige Abstützbolzen in dem Transportzustand in radialer Richtung sowie entlang eines Umfangs der Kupplung an der Anpressplatte festgelegt / ausgerichtet ist. Dadurch findet eine besonders effiziente Zentrierung statt.

Ist der Zentrierabschnitt an einer Außenumfangsseite des jeweiligen Abstützbolzens angebracht, sind bisher bekannte / verwendete Abstützbolzen lediglich geringfügig anzupassen, wodurch der zusätzliche Herstellaufwand des Zentrierabschnittes gering gehalten wird.

Vorteilhaft ist es weiterhin, wenn der Zentrierabschnitt einen sich in radialer Richtung des Abstützbolzens erweiternden Zentrierabsatz aufweist, der in dem Transportzustand in einer Öffnung der Anpressplatte eingeschoben ist. Dadurch ist die Zentrierung noch einfacher ausgestaltet. Genauso ist es von Vorteil, wenn statt auf eine eckige Schulter auf einen konischen Verlauf gesetzt wird, um ein axialen Anschlag zu realisieren.

Weist der Zentrierabschnitt einen, vorzugsweise in axialer Richtung des Abstützbolzens an den Zentrierabsatz angrenzenden Transportanschlag auf, der in dem Transportzustand an einer ersten, axialen Stirnfläche der Anpressplatte abgestützt ist, wird zugleich eine Verliersicherung der Anpressplatte durch den Abstützbolzen realisiert.

Vorteilhaft ist es auch, wenn jeder Abstützbolzen durch die Anpressplatte hindurchragt, wobei der Zentrierabschnitt des jeweiligen Abstützbolzens an einer, dem Hebelelement abgewandten, axialen Seite der Anpressplatte an der Anpressplatte anliegt. Dadurch ist die Kupplung besonders einfach aufgebaut.

Vorzugsweise ist das Hebelelement gegenüber der Anpressplatte derart federelastisch vorgespannt, dass eine gewisse Vorspannkraft auf den Abstützbolzen in einer ersten axialen Richtung aufgebracht ist. Diese erste axiale Richtung ist die gleiche Richtung, in die auch der Transportanschlag mit seiner axialen Seite ausgerichtet ist. Dadurch wird der Abstützbolzen in dem Transportzustand zur zentrierten Anlage an der Anpressplatte Spannung aufgezwungen.

Jeder Abstützbolzen weist einen Einschiebeabschnitt auf, der zur Zentrierung an einer (vorzugsweise als Schwungrad ausgestalteten) Gegendruckplatte vorbereitet ist. Dadurch ist umgesetzt, dass der Abstützbolzen im Betriebszustand an dem Schwungrad zentriert ist.

Dabei ist jeder Abstützbolzen in einem Betriebszustand der Kupplung an der Gegendruckplatte befestigt, wodurch die Anbindung des Abstützbolzens besonders direkt umgesetzt ist.

Von Vorteil ist es auch, wenn jeder Abstützbolzen als Hohlbolzen ausgestaltet ist und eine Durchgangsöffnung aufweist, in die ein Befestigungsmittel einschiebbar ist (bzw. in dem Betriebszustand eingeschoben ist). Denn dadurch kann der Abstützbolzen besonders kompakt ausgestaltet werden und die Befestigung ist ebenfalls besonders kompakt umgesetzt.

Sind die Abstützbolzen an der Anpressplatte entlang eines Umfangs gleichmäßig verteilt angeordnet, ist die Abstützung des Hebelelementes besonders stabil umgesetzt.

In anderen Worten ausgedrückt, ist somit eine Kupplung umgesetzt, bei der die Anpressplatte durch mehrere, in Umfangsrichtung verteilt angeordnete, mit der Gegendruckplatte verbundene oder verbindbare Hohlbolzen zentriert ist. In radialer Richtung auf der Innenseite der kreisförmig verteilten Hohlbolzen ist die Schwenklagerung für die Tellerfeder üblicherweise durch einen gegendruckplattenseitigen Drahtring und ein aktorseitiges Stützblech ausgebildet. Die in axialer Richtung begrenzt verlagerbare Anpressplatte steht in radialer Richtung außerhalb der kreisförmig verteilten Hohlbolzen mit der Tellerfeder in Kontakt und kann gleichermaßen durch die Hohlbolzen zentriert werden und/oder drehfest an die Gegendruckplatte angebunden werden. Erfindungsgemäß werden Zentrierhilfen für die bzw. an den Hohlbolzen vorgeschlagen, wobei in der Transportlage der Druckplattenbaugruppe erste Zentrierhilfen die Hohlbolzen in der Anpressplatte zentrieren. Bei der Montage der Druckplattenbaugruppe am Schwungrad verlassen die Hohlbolzen die anpressplattenseitige Zentrierung, wobei zweite Zentrierhilfen die Hohlbolzen am Schwungrad zentrieren, auf das die Druckplattenbaugruppe aufgesetzt wird.

Die Erfindung wird nun nachfolgend anhand mehrerer Figuren näher erläutert.

Es zeigen:

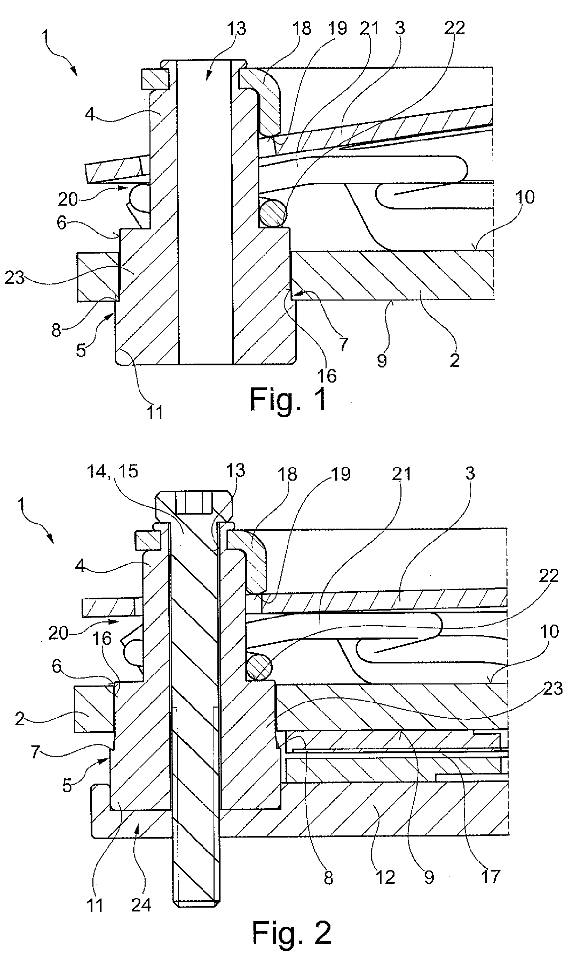

- Fig. 1: eine Längsschnittdarstellung durch eine erfindungsgemäße Kupplung nach einer vorteilhaften (ersten) Ausführungsform, wobei die Kupplung in einer Transportstellung dargestellt ist, in der der besonders gut zu erkennende Abstützbolzen noch nicht an einer Gegendruckplatte / einem Schwungrad befestigt ist, sondern durch dessen zentrierter Anlage mit Hilfe des Zentrierabschnittes ausgerichtet ist, und
- Fig. 2: eine Längsschnittdarstellung gemäß Fig. 1, wobei die erfindungsgemäße Kupplung nun in einem Betriebszustands dargestellt ist, in welchem der Abstützbolzen mittels eines Befestigungsmittels an einer Gegendruckplatte befestigt ist und der Zentrierabschnitt mit seinem Transportanschlag in axialer Richtung beabstandet zur Anpressplatte angeordnet ist.

Die Figuren sind lediglich schematischer Natur und dienen ausschließlich dem Verständnis der Erfindung. Die gleichen Elemente sind mit denselben Bezugszeichen versehen.

In Fig. 1 ist die erfindungsgemäße Kupplung 1 gemäß einer ersten vorteilhaften Ausführungsform gut zu erkennen. Die Kupplung 1 ist als eine Reibungskupplung / Reibkupplung, nämlich eine trocken laufende Reibkupplung, die alternativ jedoch auch nass laufend ausgestaltet ist, ausgebildet. Die Kupplung 1 ist in einem Betriebszustand / im Betrieb in einem hier der Übersichtlichkeit nicht weiter dargestellten Antriebsstrang eines Kraftfahrzeuges eingesetzt. Die Kupplung 1 ist dabei üblicherweise als ein öffenbares Kupplungselement zwischen einer Ausgangswelle (Kurbelwelle) einer Verbrennungskraftmaschine, wie ein Diesel- oder Ottomotor, und einer Getriebeeingangswelle eines Getriebes des Kraftfahrzeuges angebracht.

Die Kupplung 1 gemäß der abgebildeten, bevorzugten ersten Ausführungsform ist dazu vorgesehen, direkt an eine als Schwungrad ausgestaltete Gegendruckplatte 12, wie auch nachfolgend in Verbindung mit Fig. 2 erläutert ist, angebracht zu sein. Die Kupplung 1 weist auf übliche Weise eine Anpressplatte 2 auf, die relativ zu der Gegendruckplatte 12 im Betriebszustand der Kupplung 1 in axialer Richtung der Kupplung 1 (d.h. in axialer Richtung einer Drehachse der Kupplung 1) verschiebbar gelagert ist. Insbesondere lässt sich die Anpressplatte 2 zwischen einer eingekuppelten Stellung, in der sie eine im Betriebszustand drehfest mit der Getriebeeingangswelle verbundene Kupplungsscheibe 17 drehfest mit dem Schwungrad / der Gegendruckplatte 12 verbindet, und einer ausgekuppelten Stellung, in der sie außer drehmomentübertragendem Kontakt mit der Kupplungsscheibe 17 angeordnet ist und folglich in einer kein Drehmoment von der Gegendruckplatte 12 auf die Kupplungsscheibe 17 übertragen wird, verschieben.

Zum Verschieben der Anpressplatte 2 in der axialen Richtung der Kupplung 1 zwischen der eingekuppelten und der ausgekuppelten Stellung dient u.a. ein Hebelelement 3 eines Betätigungssystems. Das Hebelelement 3 ist hierbei als eine Tellerfeder ausgestaltet und somit nachfolgend auch als Tellerfeder bezeichnet. Das Hebelelement 3 ist derart verschwenkbar relativ zu der Anpressplatte gelagert, dass es zwischen zwei Verschwenk(end)positionen verstellbar / verschwenkbar ist. Eine erste Verschwenkposition des Hebelelementes 3 ist der eingekuppelten Stellung der Kupplung 1 / der Anpressplatte 2 zugeordnet. In dieser ersten Verschwenkposition drückt das Hebelelement 3 derart in axialer Richtung (der Kupplung 1) auf die Anpressplatte 2, dass die Anpressplatte 2 in reibkraftschlüssigem Kontakt mit der Kupplungsscheibe 17 gedrängt ist. Eine zweite Verschwenkposition des Hebelelementes 3 ist der ausgekuppelten Stellung der Kupplung 1 / der Anpressplatte 2 zugeordnet. In dieser zweiten Verschwenkposition ist das Hebelelement 3 mit einer geringeren Druckkraft als in der ersten Verschwenkposition an der Anpressplatte 2 anliegend oder gar drucklos, beabstandet von der Anpressplatte 2 angeordnet, so dass die Anpressplatte 2 außerreibkraftschlüssigem Kontakt mit der Kupplungsscheibe 17 befindlich ist.

Zur schwenkbaren Lagerung, d.h. zur Abstützung des Hebelelementes 3 sind mehrere entlang des Umfangs der Kupplung 1, gleichmäßig verteilt angeordnete Abstützbolzen 4 vorgesehen. Die Abstützbolzen 4 sind mit ihrer Längsachse in axialer Richtung der Kupplung 1 ausgerichtet.

Wie in Fig. 1 besonders gut zu erkennen ist, sind an jeweils einer axialen Seite der Tellerfeder 3 Schwenklagerungen in Form von Abstützbereichen 19, 20 vorgesehen. Je Abstützbolzen 4 sind dabei ein erster Abstützbereich 19 und ein zweiter Abstützbereich 20 ausgebildet. Auf einer ersten axialen Seite, nämlich jener Seite, die der Anpressplatte 2 abgewandt ist, liegt das Hebelelement 3 an einem, durch ein Stützblech 18 ausgebildeten, ersten Abstützbereich 19 an. Das Stützblech 18 ist wiederum an jedem Abstützbolzen 4 befestigt und daher auch insbesondere in axialer Richtung der Kupplung 1 an diesem gehalten. An einer der ersten axialen Seite, abgewandten, zweiten axialen Seite des Hebelelementes 3, d.h. jener Seite, die der Anpressplatte 2 zugewandt ist, ist das Hebelelement 3 mittels eines Drahtrings 21 abgestützt. Der Drahtring 21 ist an einer Federanlagefläche 22 jedes Abstützbolzens 4 abgestützt. Radial innen wird durch den Drahtring 21 das Hebelement 3 geklemmt, während radial außen nur ein Aufliegen vom Hebelelement 3 auf der Anpressplatte 2 zu beobachten ist. Unter Abstützung an dem ersten Abstützbereich 19 und einem zweiten Abstützbereich 20 ist das Hebelelement 3 zwischen seinen Verschwenkpositionen verschwenkbar, weshalb die Abstützbereiche 19 und 20 eine Schwenklagerung des Hebelelementes 3 ausbilden.

Im vormontierten Zustand der Kupplung 1, d.h. in jenem Zustand, in dem die Abstützbolzen 4 bereits die Tellerfeder / das Hebelelement 3 aufnehmen und die Anpressplatte 2 mittels der Abstützbolzen 4 aufgenommen ist (Fig. 1), ist die Anpressplatte 2 relativ zu den Abstützbolzen 4 mittels eines Zentrierabschnittes 5, der an den Abstützbolzen 4 jeweils vorgesehen ist, zentriert. Dieser Zusammenbau ist insbesondere in einem Transportzustand der Kupplung 1 umgesetzt, in dem die Kupplung 1 noch nicht endgültig in einem Antriebsstrang des Kraftfahrzeuges, etwa der Gegendruckplatte 12, montiert / befestigt ist. Wie bzgl. des Zentrierabschnittes 5 insbesondere in Fig. 1 zu erkennen ist, weist jeder Abstützbolzen 4 einen solchen Zentrierabschnitt 5 auf.

Der Zentrierabschnitt 5 weist zum einen einen Zentrierabsatz 7 auf, der auch besonders gut in Fig. 2 zu erkennen ist. Dieser Zentrierabsatz 7 ist an der Außenumfangsseite 6 des Abstützbolzens 4 angeordnet. Der Zentrierabsatz 7 erstreckt sich so weit in radialer Richtung von einem, die Anpressplatte 2 durchragenden / durchdringenden Grundabschnitt 23 des Abstützbolzens 4 nach außen, dass der Zentrierabsatz 7, zumindest in einem Umfangsbereich, den Umfang / den Durchmesser des Abstützbolzens 4 radial vergrößert. Dieser Zentrierabsatz 7 stellt daher eine ringförmige Verdickung des Abstützbolzens 4 gegenüber dem Grundabschnitt 23 dar. Der radiale Übergang zwischen dem Grundabschnitt 23 in den Zentrierabsatz 7 ist als Schräge ausgebildet, sodass sich der Durchmesser in axialer Richtung des Bolzens 4 kontinuierlich verändert. Dieser Zentrierabsatz 7 erstreckt sich in axialer Richtung des Abstützbolzens 4 über eine gewisse Distanz, wobei der Abstützbolzen 4 über diese Distanz hinweg einen gleich bleibenden Durchmesser aufweist.

Der Zentrierabsatz 7 ist dabei derart geometrisch ausgestaltet, dass der Abstützbolzen 4 in eine Öffnung 16 (als Durchgangsloch / Durchgangsöffnung ausgebildet unter einer Spielpassung einschiebbar ist und dadurch in der Anpressplatte 2 aufnehmbar ist. Wie in Fig. 1 zu erkennen ist, ist der Zentrierabsatz 7 in der Öffnung 16, unter Ausbildung der Spielpassung in der Anpressplatte 2 gehalten / aufgenommen / eingeschoben. Dadurch ist der Abstützbolzen 4 in radialer Richtung und in Umfangsrichtung der Kupplung 1 in der Anpressplatte 2 festgelegt / fixiert. Lediglich eine Verschiebung des Abstützbolzens 4 in seiner axialen Richtung ist in diesem Transportzustand ermöglicht.

Neben dem Zentrierabsatz 7 weist der Abstützbolzen 4 einen Transportanschlag 8 auf, der in axialer Richtung des Abstützbolzens 4 an den Zentrierabsatz 7 anschließt. Der Transportanschlag 8 ist durch eine axiale Stirnseite eines sich in radialer Richtung von dem Zentrierabsatz 7 aus nach außen erstreckenden Einschiebeabschnitt 11 gebildet. Der Transportanschlag 8 liegt in der Transportstellung an einer der Tellerfeder 3 abgewandten, ersten (axialen) Stirnfläche 9 der Anpressplatte 2 an. Die erste Stirnfläche 9 der Anpressplatte 2 ist jene Seite, die einer zweiten Stirnfläche 10 der Anpressplatte 2 und somit auch dem Hebelelement 3 abgewandt ist. Dadurch wird verhindert, dass der Abstützbolzen 4 aus der Anpressplatte 2 in Richtung der Tellerfeder 3 hinaus rutscht. Aufgrund einer elastischen Vorspannung der Tellerfeder 3 relativ zu den Abstützbolzen 4 im Transportzustand, ist der Abstützbolzen 4 mit einer gewissen Vorspannkraft mit seinem Transportanschlag 8 gegen die Anpressplatte 2 elastisch angedrückt.

Wird schließlich zum Erreichen eines Betriebszustandes die Kupplung 1 / der Vorzusammenbau der Kupplung 1 gemäß Fig. 2 an die Gegendruckplatte 12 angebracht, wird jeder Abstützbolzen 4 mittels eines als Schraube 15 ausgebildeten Befestigungsmittels 14 an der Gegendruckplatte 12 befestigt. Jeder Abstützbolzen 4 ist als Hohlbolzen ausgebildet und weist die zentrale, in axialer Richtung verlaufende Durchgangsöffnung 13 auf, in die ein Befestigungsmittel 14 / eine Schraube 15 eingeschoben ist. Das Befestigungsmittel 14 durchragt den Abstützbolzen 4 in Längsrichtung / axialer Richtung vollständig. Das Befestigungsmittel 14 wird mit einem axialen Endbereich in der Gegendruckplatte 12 befestigt / verschraubt. Dabei wird jeder Abstützbolzen 4, mit seinem Einschiebeabschnitt 11, der hier als axialer Endbereich des Abstützbolzens 4 ausgebildet ist, in eine Aufnahme 24 (als Bohrung ausgebildet) der Gegendruckplatte 12 eingeschoben. Die Geometrie, insbesondere der Außendurchmesser / der Außenumfang dieses Einschiebeabschnittes 11 ist derart auf einen Innendurchmesser / Innenumfang der Aufnahme 24 abgestimmt, dass mit dem Einschieben des Einschiebeabschnittes 11 in diese Aufnahme 24 der Abstützbolzen 4 relativ zu der Gegendruckplatte 12 zentriert ist und somit in radialer Richtung festgelegt ist. Zugleich, mit dem Befestigen / Anschrauben des Befestigungsmittels 14 an der Gegendruckplatte 12, wird der Abstützbolzen 4 derart relativ zu der Anpressplatte 4 verschoben, dass der Zentrierabschnitt 5 aus der Öffnung 16 der Anpressplatte 2 heraus rutscht / herausgeschoben wird und die Anpressplatte 2 in dieser Betriebsstellung / dem Betriebszustand ein gewisses radiales Spiel gegenüber der Abstützbolzen 4 aufweist, was Eigenspannungen und eine leichtere Verschiebbarkeit der Anpressplatte 2 ermöglicht.

In anderen Worten ausgedrückt, wird somit das Problem der Zentrierung in der Transportlage durch einen Zentrierabsatz 7 auf dem Hohlbolzen 4, auf den die Anpressplatte 2 in der Transportlage aufliegt, gelöst. Bei der Kupplungsmontage finden die vorzentrierten Hohlbolzen 4 in die entsprechenden Zentrierbohrungen 24 des Schwungrads 12. Durch das Montieren der Kupplung 1 wird die Anpressplatte 2 aufgebaut, die Anpressplatte 2 hebt sich aus dem Zentrierabsatz 7 des Hohlbolzens 4. Die Schraube 15 verbindet den Hohlbolzen 4 mit dem Schwungrad 12. Der Stützring bildet die obere, innere Tellerfederlagerung. Die Tellerfeder 3 liegt innen, oben auf dem Stützring und außen unten auf aufgestellten Lappen der Anpressplatte 2 auf. Der Drahtring stellt die Tellerfederlagerung unten, innen dar. Zwischen der Anpressplatte 2 und der Schwungscheibe befindet sich die Kupplungsscheibe 17. Hier ist der Hohlbolzen 4 in einer Zentrierbohrung des Schwungrades 12 zentriert. Werden die Schrauben 15 gelöst, so heben sich die Hohlbolzen 4 wieder aus den Zentrierbohrungen des Schwungrads 12 heraus. Nach einem gewissen Weg werden die Hohlbolzen 4 durch eine Zentrierschräge (Zentrierabsatz 7) und anschließend durch einen Zentrierabsatz (Transportanschlag 8) in der Anpressplatte 2 zentriert. Somit sind die Hohlbolzen 4 auch in der Transportlage in definierter Position, um ein erneutes Anschrauben zu ermöglichen.

### Bezugszeichenliste

- 1: Kupplung
- 2: Anpressplatte
- 3: Hebelelement
- 4: Abstützbolzen
- 5: Zentrierabschnitt
- 6: Außenumfangsseite
- 7: Zentrierabsatz
- 8: Transportanschlag
- 9: erste Stirnfläche
- 10: zweite Stirnfläche
- 11: Einschiebeabschnitt
- 12: Gegendruckplatte
- 13: Durchgangsöffnung
- 14: Befestigungsmittel
- 15: Schraube
- 16: Aussparung
- 17: Kupplungsscheibe
- 18: Stützblech
- 19: erster Abstützbereich
- 20: zweiter Abstützbereich
- 21: Drahtring
- 22: Federanlagefläche
- 23: Grundabschnitt
- 24: Aufnahme

## Patentansprüche

1. Kupplung (1) für einen Antriebsstrang eines Kraftfahrzeuges, mit einer, zwischen einer eingekuppelten und einer ausgekuppelten Stellung verstellbar gelagerten Anpressplatte (2) und einem Hebelelement (3), das an einer, durch mehrere Abstützbolzen (4) ausgebildeten Schwenklagerung relativ zu der Anpressplatte (2) schwenkbar abgestützt ist, wobei die Stellung der Anpressplatte (2) von einer Verschwenkposition des Hebelelementes (3) abhängig ist, wobei jeder Abstützbolzen (4) einen Zentrierabschnitt (5) aufweist, welcher Zentrierabschnitt (5) in einem Transportzustand der Kupplung (1) an der Anpressplatte (2), den Abstützbolzen (4) relativ zu der Anpressplatte (2) zentrierend, anliegt, **dadurch gekennzeichnet, dass** jeder Abstützbolzen (4) einen Einschiebeabschnitt (11) aufweist, der zur Zentrierung an einer Gegendruckplatte (12) vorbereitet ist.

2. Kupplung (1) nach Anspruch 1, **dadurch gekennzeichnet, dass** der Zentrierabschnitt (5) derart geometrisch ausgestaltet sowie auf die Anpressplatte (2) abgestimmt ist, dass der jeweilige Abstützbolzen (4) in dem Transportzustand in radialer Richtung sowie entlang eines Umfangs der Kupplung (1) an der Anpressplatte (2) festgelegt ist.

3. Kupplung (1) nach Anspruch 1 oder 2, **dadurch gekennzeichnet, dass** der Zentrierabschnitt (5) an einer Außenumfangsseite (6) des jeweiligen Abstützbolzens (4) angebracht ist.

4. Kupplung (1) nach einem der Ansprüche 1 bis 3, **dadurch gekennzeichnet, dass** der Zentrierabschnitt (5) einen sich in radialer Richtung des Abstützbolzens (4) erweiternden Zentrierabsatz (7) aufweist, der in dem Transportzustand in einer Öffnung (16) der Anpressplatte (2) eingeschoben ist.

5. Kupplung (1) nach einem der Ansprüche 1 bis 4, **dadurch gekennzeichnet, dass** der Zentrierabschnitt (5) einen Transportanschlag (8) aufweist, der in dem Transportzustand an einer ersten, axialen Stirnfläche (9) der Anpressplatte (2) abgestützt ist.

6. Kupplung (1) nach einem der Ansprüche 1 bis 5, **dadurch gekennzeichnet, dass** jeder Abstützbolzen (4) durch die Anpressplatte (2) hindurchragt, wobei der Zentrierabschnitt (5) des jeweiligen Abstützbolzens (4) an einer, dem Hebelelement (3) abgewandten, axialen Seite (9) der Anpressplatte (2) an der Anpressplatte (2) anliegt.

7. Kupplung (1) nach einem der Ansprüche 1 bis 6, **dadurch gekennzeichnet, dass** jeder Abstützbolzen (4) in einem Betriebszustand der Kupplung (1) an der Gegendruckplatte (12) befestigt ist.

8. Kupplung (1) nach einem der Ansprüche 1 bis 7, **dadurch gekennzeichnet, dass** jeder Abstützbolzen (4) als Hohlbolzen ausgestaltet ist und eine Durchgangsöffnung (13) aufweist, in die ein Befestigungsmittel (14) einschiebbar ist.

9. Kupplung (1) nach einem der Ansprüche 1 bis 8, **dadurch gekennzeichnet, dass** die Abstützbolzen (4) an der Anpressplatte (2) entlang eines Umfangs gleichmäßig verteilt angeordnet sind.

## Claims

1. Clutch (1) for a drive train of a motor vehicle, having a pressure plate (2) which is mounted such that it can be adjusted between an engaged and a disengaged position, and having a lever element (3) which is supported such that it can be pivoted relative to the pressure plate (2) on a pivot bearing which is configured by way of a plurality of supporting pins (4), the position of the pressure plate (2) being dependent on a pivoting position of the lever element (3), each supporting pin (4) having a centring section (5), which centring section (5) bears against the pressure plate (2) in a transport state of the clutch (1), in a manner which centres the supporting pin (4) relative to the pressure plate (2), **characterized in that** each supporting pin (4) has a push-in section (11) which is prepared for centring on a counterpressure plate (12).

2. Clutch (1) according to Claim 1, **characterized in that** the centring section (5) is configured geometrically and is adapted to the pressure plate (2) in such a way that the respective supporting pin (4) is fixed on the pressure plate (2) in the radial direction and along a circumference of the clutch (1) in the transport state.

3. Clutch (1) according to Claim 1 or 2, **characterized in that** the centring section (5) is attached on an outer circumferential side (6) of the respective supporting pin (4).

4. Clutch (1) according to one of Claims 1 to 3, **characterized in that** the centring section (5) has a centring shoulder (7) which widens in the radial direction of the supporting pin (4) and is pushed into an opening (16) of the pressure plate (2) in the transport state.

5. Clutch (1) according to one of Claims 1 to 4, **characterized in that** the centring section (5) has a transport stop (8) which is supported on a first, axial end face (9) of the pressure plate (2) in the transport state.

6. Clutch (1) according to one of Claims 1 to 5, **characterized in that** each supporting pin (4) protrudes through the pressure plate (2), the centring section (5) of the respective supporting pin (4) bearing against the pressure plate (2) on an axial side (9) of the pressure plate (2), which axial side (9) faces away from the lever element (3).

7. Clutch (1) according to one of Claims 1 to 6, **characterized in that** each supporting pin (4) is fastened to the counterpressure plate (12) in an operating state of the clutch (1).

8. Clutch (1) according to one of Claims 1 to 7, **characterized in that** each supporting pin (4) is configured as a hollow pin and has a through opening (13), into which a fastening means (14) can be pushed.

9. Clutch (1) according to one of Claims 1 to 8, **characterized in that** the supporting pins (4) are arranged on the pressure plate (2) in a manner which is distributed uniformly along a circumference.

## Revendications

1. Embrayage (1) pour le train d'entraînement d'un véhicule automobile, présentant une plaque de poussée (2) montée à déplacement entre une position embrayée et une position débrayée et un élément de levier (3) qui s'appuie à pivotement par rapport à la plaque de poussée (2) sur un palier pivotant formé de plusieurs goujons de soutien (4), la position de la plaque de poussée (2) dépendant de la position d'inclinaison de l'élément de levier (3), chaque goujon de soutien (4) présentant une section de centrage (5), cette section de centrage (5) reposant dans une situation de transport de l'embrayage (1) contre la plaque de poussée (2) en centrant le goujon de soutien (4) par rapport à la plaque de poussée (2),
**caractérisé en ce que**
chaque goujon de soutien (4) présente une section d'insertion (11) préparée pour le centrage sur une plaque de contre-poussée (12).

2. Embrayage (1) selon la revendication 1, **caractérisé en ce que** la section de centrage (5) a une configuration géométrique et est accordée à la plaque de poussée (2) de telle sorte qu'en situation de transport, le goujon de soutien (4) soit immobilisé contre la plaque de poussée (2) dans la direction radiale ainsi que le long de la périphérie de l'embrayage (1).

3. Embrayage (1) selon les revendications 1 ou 2, **caractérisé en ce que** la section de centrage (5) est formée sur un côté périphérique extérieur (6) du goujon de soutien (4) concerné.

4. Embrayage (1) selon l'une des revendications 1 à 3, **caractérisé en ce que** la section de centrage (5) présente un appendice de centrage (7) qui s'évase dans la direction radiale du goujon de soutien (4) et qui, en situation de transport, est inséré dans une ouverture (16) de la plaque de poussée (2).

5. Embrayage (1) selon l'une des revendications 1 à 4, **caractérisé en ce que** la section de centrage (5) présente une butée de transport (8) qui, en situation de transport, s'appuie sur une première surface frontale axiale (9) de la plaque de poussée (2).

6. Embrayage (1) selon l'une des revendications 1 à 5, **caractérisé en ce que** chaque goujon de soutien (4) traverse la plaque de poussée (2), la section de centrage (5) de chaque goujon de soutien (4) reposant contre la plaque de poussée (2) sur un côté axial (9), non tourné vers l'élément de levier (3), de la plaque de poussée (2).

7. Embrayage (1) selon l'une des revendications 1 à 6, **caractérisé en ce que en ce qu'**en situation de fonctionnement de l'embrayage (1), chaque goujon de soutien (4) est fixé sur la plaque de contre-poussée (12).

8. Embrayage (1) selon l'une des revendications 1 à 7, **caractérisé en ce que** chaque goujon de soutien (4) est configuré comme goujon creux et est traversé par une ouverture (13) dans laquelle un moyen de fixation (14) peut être inséré.

9. Embrayage (1) selon l'une des revendications 1 à 8, **caractérisé en ce que** les goujons de soutien (4) sont répartis régulièrement à la périphérie de la plaque de poussée (2).
